(19)

**Europäisches Patentamt**

**European Patent Office**

**Office européen des brevets**

(11) **EP 4 566 699 A1**

(12) **EUROPEAN PATENT APPLICATION**

(43) Date of publication:
**11.06.2025 Bulletin 2025/24**

(21) Application number: **23214973.2**

(22) Date of filing: **07.12.2023**

(51) International Patent Classification (IPC):
*B01D 67/00* (2006.01)     *B01D 69/12* (2006.01)
*B01D 71/60* (2006.01)

(52) Cooperative Patent Classification (CPC):
**B01D 67/0093; B01D 67/00931; B01D 69/12;**
**B01D 69/125; B01D 71/58; B01D 71/60;**
**B01D 71/601;** B01D 2239/0442; B01D 2239/0471;
B01D 2239/0478; B01D 2323/30; B01D 2323/36;
B01D 2325/16; B01D 2325/48

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Gambro Lundia AB**
**226 43 Lund (SE)**

(72) Inventors:
• **Rempfer, Martin**
  **72810 Gomaringen (DE)**

• **Kurbel, Vivian Stefan**
  **78667 Villingendorf (DE)**
• **Storr, Markus**
  **70794 Filderstadt (DE)**
• **Votteler, Stefanie**
  **72768 Reutlingen (DE)**

(74) Representative: **Perchenek, Nils**
**Gambro Dialysatoren GmbH**
**Legal and Intellectual Property**
**Holger Crafoord-Strasse 26**
**72379 Hechingen (DE)**

(54) **COMPOSITE MEMBRANE**

(57)     The present disclosure relates to a composite membrane comprising a porous support structure, a polyethylene imine (PEI) layer coated onto the support structure, and poly(hexamethylene biguanide) (PHMB) grafted to the coating layer of the support structure. The present disclosure also provides a method to produce the composite membrane. The present disclosure also provides a filtration and/or diffusion device comprising the composite membrane.

EP 4 566 699 A1

**Description**

**Technical Field**

The present disclosure relates to a composite membrane comprising a porous support structure, a polyethylene imine (PEI) layer coated onto the support structure, and poly(hexamethylene biguanide) (PHMB) grafted to the coating layer of the support structure. The present disclosure also provides a method to produce the composite membrane. The present disclosure also provides a filtration and/or diffusion device comprising the composite membrane.

**Background of the Invention**

Membrane manufacturing processes are often based on the phase inversion process. In this process, a membrane is formed by inducing the separation of the polymer phase from either a solution or a molten state through interaction with a nonsolvent or through decreasing the temperature. As the phase inversion process is kinetically governed, there are limitations in the pore sizes as well as in the chemical and physical properties of the membrane surface that can be achieved with a given polymer system. This affects membrane separation performance (separation by size exclusion) as well as absorption properties (chemical and physical interactions of the medium and the membrane surface).
Membranes may be modified after production to adjust surface properties. Membrane post-functionalization methods allow for adding functionalities to the membrane surface, and to some extent also to the inner surface of the pores.
Poly(hexamethylene biguanide) (PHMB), also called Polyhexa-nide, CAS Number 28757-47-3, is a polymer used as a disinfectant and antiseptic. In most formulations, the PHMB hydrochloride salt, CAS Number 32289-58-0, is used.
PHMB has been shown to be effective against *Pseudomonas aeruginosa, Staphylococcus aureus, Escherichia coli, Candida albicans, Aspergillus brasiliensis, Klebsiella pneumoniae,* and enterococci.
Products containing PHMB are used for inter-operative irrigation, pre- and post-surgery skin and mucous membrane disinfection, post-operative dressings, surgical and non-surgical wound dressings, surgical bath/hydrotherapy, chronic wounds like diabetic foot ulcer and burn wound management, routine antisepsis during minor incisions, catheterization, first aid, surface disinfection, and linen disinfection.
PHMB eye drops have been used as a treatment for eyes affected by *Acanthamoeba* keratitis. PHMB is also used as an ingredient in some contact lens cleaning products, cosmetics, personal deodorants and some veterinary products.

**Summary of the Invention**

The present disclosure provides a composite membrane comprising a porous polymeric support structure, a polyethylene imine (PEI) layer coated onto the support structure, and poly(hexamethylene biguanide) (PHMB) grafted to the coating layer of the support structure.
The present disclosure also provides methods for production of the composite membrane and devices comprising the composite membrane.

**Detailed Description of the Invention**

The composite membrane of the present disclosure comprises i) a porous polymeric support structure, ii) a polyethylene imine (PEI) layer coated onto the support structure i), and iii) poly(hexamethylene biguanide) (PHMB) grafted to the coating layer ii) of the support structure.
The porous polymeric support structure i) can have any suitable geometry according to the needs of the intended use, e.g., it can take the form of a flat sheet, a hollow fiber, or be shaped to form chambers or other geometries needed. In one embodiment of the invention, the porous polymeric support structure is a hollow fiber membrane. In another embodiment of the invention, the porous polymeric support structure is a flat sheet membrane.
The pore structure and pore dimensions of the porous polymeric support structure also can vary over a wide range. In one embodiment, the support structure has a lamellar constitution. In another embodiment, the support structure forms a three-dimensional network having a sponge structure. In still another embodiment, the support structure forms a three-dimensional network having a finger structure comprising macroscopic voids. The pore structure of the support can be uniform or asymmetric.
In some embodiments, the porous polymeric support structure i) is a microporous support structure, i.e., it has a mean flow pore size, determined by capillary flow porometry, which is larger than 0.1 $\mu$m. In one embodiment, the mean flow pore size is in the range of from of from 0.1 um to 0.7 um, for instance from 0.2 um to 0.4 um. In another embodiment, the mean flow pore size is larger than 0.3 $\mu$m, e.g., in the range of from 0.3 to 0.7 $\mu$m. In still another embodiment, the mean flow pore size is larger than 1 $\mu$m, e.g., in the range of from 1 to 10 $\mu$m, or in the range of from 1 to 5 $\mu$m.

Capillary flow porometry is a liquid extrusion technique in which at differential gas pressure the flow rates through wet and dry membranes are measured. Before measurement the membrane is immersed in a low surface tension liquid (e.g., a perfluoroether commercially available under the trade name Porofil®) to ensure that all pores including the small ones are filled with the wetting liquid. By measuring the pressure at which the liquid is pressed out of the pores its corresponding diameter can be calculated using the Laplace equation. With this method the pore size distribution is determined of those pores that are active in the mass transport. Dead end and isolated pores are omitted. The hollow fiber membranes are measured inside-out.

Laplace equation:

$$Dp = 4 \, Y \cos \theta \, / \, \Delta P$$

Dp = diameter pores [m]
Y = surface tension [N/m]; for Porofil® 0.016 [N/m]
$\Delta P$ = pressure [Pa]
Cos $\theta$ = contact angle; by complete wetting cos $\theta$ = 1

In some embodiments, the porous polymeric support structure i) is a nanoporous support structure, i.e., having a pore size in the nanometer range, e.g., from 1 to 20 nm. Such nanoporous support structures are suitable for ultrafiltration of liquids, or for dialysis.

The porous polymeric support structure i) is comprised of synthetic polymers. Examples of suitable synthetic polymers include polysulfones (PSU); polyethersulfones (PES); polyacrylonitriles (PAN); and copolymers and blends of the individual polymers. In one embodiment, the porous polymeric support structure is comprised of a blend of polyethersulfone and polyvinylpyrrolidone. In another embodiment, the porous polymeric support structure comprises a copolymer of acrylonitrile and sodium methallyl sulfonate.

A polyethylene imine (PEI) layer ii) is coated onto the support structure, i.e., the surface of the support structure features a coating layer ii) comprised of polyethylene imine. In one embodiment, the weight of the PEI layer is from 3 to 7 wt%, e.g., from 4 to 6 wt% of the total weight of the composite membrane.

In an embodiment, the PEI has a weight average molecular weight $M_w$ in the range of from 10 kDa to 1000 kDa, for instance, from 25 kDa to 750 kDa.

In an embodiment, the PEI layer ii) has been cross-linked by reaction with a bifunctional cross-linker featuring terminal epoxy groups, e.g., a diglycidyl ether, for instance, polyethylene glycol diglycidyl ether (PEG-DGE) or butane diol diglycidyl ether (BDO-DGE). Cross-linking of the PEI improves stability of the PEI layer and suppresses leaching of PEI from the layer ii). Cross-linking is not required when the porous polymeric support structure i) is comprised of a polymer bearing negative charges, e.g., a copolymer of acrylonitrile and sodium methallyl sulfonate.

Poly(hexamethylene biguanide) (PHMB) iii) is grafted to the coating layer ii) of the support structure, i.e., the PEI coating layer features PHMB moieties covalently bound to PEI via homo-bifunctional epoxy spacers, e.g., diglycidyl ethers, for instance, poly(ethylene glycol) diglycidyl ether (PEG-DGE), poly(propylene glycol) diglycidyl ether (PPG-DGE), or 1,4-butanediol diglycidyl ether (BDO-DGE).

In an embodiment, the PHMB has a weight average molecular weight $M_w$ in the range of from 3 kDa to 5 kDa.

In one embodiment, the weight of the PHMB grafted onto the coating layer is from 8 to 15 wt%, e.g., from 10 to 12 wt% of the total weight of the composite membrane.

In an embodiment, the homo-bifunctional epoxy spacers have a number average molecular weight $M_n$ in the range of from 200 Da to 2,500 Da.

The present disclosure also provides a method for producing the composite membrane.

The method for producing a composite membrane comprises

a) providing a porous polymeric support structure,
b) reacting the porous polymeric support structure with an aqueous coating solution comprising PEI and, optionally, a bifunctional cross-linker with terminal epoxy groups, to obtain a porous polymeric support structure coated with PEI,
c) reacting the porous polymeric support structure coated with PEI obtained in step b) with an aqueous solution comprising PHMB and a bifunctional cross-linker with terminal epoxy groups, to obtain the composite membrane.

In step a) of the method for producing the composite membrane, a porous polymeric support structure is provided. Various types of porous polymeric support structures can be used. Suitable examples include flat sheet membranes, pleated membranes, tubular membranes, and hollow fiber membranes.

In an embodiment, the porous polymeric support structure is a hollow fiber membrane. In some embodiments, the hollow fiber membrane has an inner diameter of from 50 to 2,000 $\mu$m, preferably of from 50 to 1,000 $\mu$m, and more

preferably from 100 to 500 μm. The wall thickness is generally from 3% to 30% of the external diameter, i.e., generally from 5 to 200 μm, preferably from 10 to 80 um, and more preferably from 20 to 70 μm.

In another embodiment, the porous polymeric support structure is a flat sheet membrane. In an embodiment, the thickness of the flat sheet membrane ranges from 100 to 500 μm. A thickness of from 150 to 250 μm may be advantageous for most applications. Several flat sheet membranes may be combined in the form of a stack to form a module.

In step b) of the method, the porous polymeric support structure is reacted with an aqueous coating solution comprising PEI and, optionally, a bifunctional cross-linker with terminal epoxy groups, to obtain a porous polymeric support structure coated with PEI.

In some embodiments of the process, an aqueous solution comprising from 0.5 to 4.0 wt%, e.g., from 2.0 to 3.0 wt%, of PEI is used for coating. In some embodiments of the process, the aqueous solution comprises from 0.05 to 2.0 wt%, e.g., from 0.1 to 0.5 wt%, of a bifunctional cross-linker with terminal epoxy groups. In some embodiments, the weight ratio of PEI and cross-linker is in the range of from 15:1 to 25:1.

In an exemplary process, the porous polymeric support is reacted with an aqueous solution containing 2 wt% PEI having a weight average molecular weight $M_w$ of 25 kDa and 0.1 wt% PEG-DGE having a number average molecular weight $M_n$ of 500 Da.

The porous polymeric support is contacted with the aqueous coating solution for a time in the range of from 5 to 60 seconds, e.g., 10 to 30 seconds, for instance, by immersing the porous polymeric support into the aqueous coating solution. The coated porous polymeric support is subsequently dried. In some embodiments of the process, the coated porous polymeric support is dried for a time in the range of from 30 to 120 minutes, at a temperature in the range of from 50°C to 90°C. In an exemplary process, the coated porous polymeric support is dried for 2 hours at 80°C.

The porous polymeric support coated with PEI is optionally rinsed with water to remove leachable PEI and subsequently dried.

In step c) of the method, the porous polymeric support coated with PEI obtained in step b) is reacted with an aqueous solution comprising PHMB and a bifunctional cross-linker with terminal epoxy groups, to obtain the composite membrane of the present disclosure.

In some embodiments of the method, the aqueous solution contains from 1 to 10 wt%, e.g., from 3 to 10 wt%, PHMB. In an embodiment, the PHMB has a weight average molecular weight $M_w$ in the range of from 3 kDa to 5 kDa. In some embodiments of the method, the aqueous solution contains from 1 to 10 wt%, e.g., from 2 to 5 wt%, of the bifunctional cross-linker with terminal epoxy groups. In some embodiments of the method, the aqueous solution has a pH value in the range of from 8 to 12, e.g., from 9 to 10.

The porous polymeric support coated with PEI is contacted with the aqueous solution at a temperature in the range of from 20 to 50°C, e.g., 35 to 40°C, for a time in the range of from 1 hour to 24 hours, e.g., 4 to 8 hours, for instance, by immersing the porous polymeric support coated with PEI into the aqueous solution. The coated porous polymeric support is subsequently dried. In an exemplary process, the coated membrane is dried for 30 minutes at 80°C.

In an exemplary process, the porous polymeric support coated with PEI is reacted with an aqueous solution containing 10 wt% PHMB having a weight average molecular weight $M_w$ of 3.2 kDa, and 2.3 wt% BDO-DGE.

It has been found that the composite membrane of the present disclosure shows enhanced retention of endotoxins like LPS.

The composite membrane has high mechanical stability and shows no deterioration of filtration properties.

The present disclosure also provides a use for the composite membrane. In an embodiment, the composite membrane of the present disclosure is used for the filtration of liquids. In one embodiment, the filtration is normal-flow filtration (NFF). In another embodiment of the invention, the filtration is tangential-flow filtration (TFF).

In an embodiment, the composite membrane of the present disclosure is used for the filtration of liquids potentially comprising endotoxins, preventing the endotoxins from entering the filtrate. In an embodiment, the composite membrane is used in the filtration of dialysis solutions, holding back particles, bacteria, and endotoxins. In a further embodiment, the composite membrane is used in the filtration of solutions for peritoneal dialysis. As these contain substantial concentrations of sugars like glucose or dextrose, removal of endotoxins by filtration is particularly challenging. In another embodiment, the composite membrane is used in the filtration of solutions for infusion into a patient.

The present disclosure also provides a filtration and/or diffusion device comprising a membrane of the invention. The membrane present in the device can take the form of a sheet or a plurality of sheets, e.g., a stack of planar membranes. Alternatively, the membrane used in the device can take the form of a hollow fiber or a plurality of hollow fibers, e.g., a bundle of hollow fiber membranes. Suitable sheets and fibers, respectively, their properties and preparation have been described above.

In one embodiment of the device, the membrane forms an interface between two fluid compartments of the device.

An exemplary device comprises two compartments separated by a composite membrane, a first compartment featuring a fluid inlet and a second compartment featuring an outlet for a filtrate. The composite membrane either is a single composite membrane of the sheet membrane type as defined above, or a stack of membranes of the sheet membrane type as defined above.

Another exemplary device comprises a plurality of hollow fiber membranes, contained within an outer shell, and configured so that fluid within a space external to the hollow fibers (i.e., an extra-capillary compartment) is segregated from fluid passing through the hollow fibers and their corresponding orifices. Additionally, the device includes two manifold end chambers within the outer shell on opposite ends of the device. Each of the two orifices of the lumen of a hollow fiber connects to a different end chamber. The end chambers and the extra-capillary compartment are separated by the composite membranes of the hollow fibers.

## Examples

### Example 1 Membrane preparation

A microporous flat sheet membrane having a pore size of 0.2 $\mu$m (Pall Super Mach VC-200) was reacted with an aqueous solution containing 2 wt% PEI having a weight average molecular weight $M_w$ of 25 kDa and 0.1 wt% PEG-DGE having a number average molecular weight $M_n$ of 500 Da. Circular membrane samples having a diameter of 60 mm were used.

The membrane was immersed into the aqueous coating solution for 10 seconds. The coated membrane was dried for 2 hours at 80°C.

Circular membrane samples having a diameter of 50 mm were punched out from the dried membranes. To remove leachable PEI, the membrane samples were rinsed with water at a flow rate of 400 ml/min for 30 min. The samples were subsequently dried over night at ambient temperature.

The experiment was performed 60 times. Weight of the membrane before coating and after drying was measured, and mass increase was determined. Average mass increase of the samples having a diameter of 50 mm was (5.2$\pm$0.5)mg.

The membrane samples coated with PEI were reacted with an aqueous solution containing 10 wt% PHMB hydrochloride having a weight average molecular weight Mw of 3.2 kDa, 2.3 wt% BDO-DGE, and 0.15 wt% NaOH. The solution had a pH of 10.

The membrane samples coated with PEI were immersed into the aqueous solution and reacted at a temperature of 40°C for 20 hours. The membrane was subsequently dried for 30 minutes at 80°C.

To remove leachable PHMB, the membrane samples were rinsed with water at a flow rate of 400 ml/min for 30 min. The samples were first dried over night at ambient temperature, then in a drying cabinet at 60°C for 15 minutes.

The experiment was performed 60 times. Weight of the coated membrane before reaction with PHMB and after drying was measured, and mass increase was determined. Average mass increase of the samples was (14.2$\pm$1.8)mg.

### Example 2

#### ET retention

To test the membranes for endotoxin (ET) retention, a test solution (challenge solution) was pumped through the membrane. The filtrate was collected and analyzed for LPS content. The logarithmic retention value (LRV) was calculated from the difference between the ET concentration of the challenge solution and the concentration of the filtrate.

Circular membrane samples having a surface area of 0.8 cm$^2$ were punched out of the composite membrane. The samples were placed in filter holders under sterile conditions, the upstream side of the membrane facing upwards.

A stock solution was prepared from the lyophilized endotoxin using LAL Reagent Water (LRW), which was then vortexed for 30 min at 2700 rpm. The test solution was placed in an Erlenmeyer flask. The challenge solution was prepared from the test solution by adding a defined volume of the ET stock solution. Due to the aggregation behavior of LPS, it is not possible to predict the exact ET concentration, as the size and number of aggregates contained in this volume can vary greatly. Therefore, a sample of the challenge solution was always taken to determine its exact LPS concentration.

The challenge solution was stirred with a magnetic stirrer for 15 minutes to make sure that the LPS was evenly distributed, and then pumped through the filter holder with the test membrane. The first two milliliters of the filtrate were discarded. Two milliliters of the filtrate were then collected in a sample container. Depending on the flow rate set, there was a predetermined period of time for sampling.

Sample containers were weighed before and after the experiment to determine the exact flow rate from the filtrate weight and the duration of sampling. The samples were then diluted with the matrix solution (LPS-free) used in the experiment in increments of ten to obtain an ET concentration of approximately 1 EU/mL for the subsequent Limulus Amebocyte Lysate (LAL) assay.

The Limulus Amebocyte Lysate assay (LAL) was performed to quantify the endotoxin content of the samples. In the LAL, endotoxin from gram-negative bacteria catalyzes the activation of a proenzyme contained in the blood cells of horseshoe crabs. The active enzyme reacts with an added synthetic peptide that is coupled to p-nitroaniline dye. Yellow p-nitroaniline is released from the colorless substrate and can be measured photometrically at a wavelength of 405 nm. The increase in intensity of the coloring is directly proportional to the endotoxin concentration. The detection limit of the assay is 0.005 EU/mL and the upper limit of the detection range is 5 EU/mL. By comparison of the starting concentration of the challenge solution from the filtration experiment with the ET concentration after filtration, the LRV of the tested membrane can be determined as LRV = $\log_{10}(c_{challenge}/c_{filtrate})$.

Filtration of PD solutions

Membranes were tested with a challenge solution prepared from a PD solution comprising 4.25 wt% glucose (Dianeal®, Baxter Healthcare) which was spiked with 600 EU/ml of endotoxin (*E. Coli* O55:B5 CSE). In each experiment, a total of 120.000 $EU/cm^2$ of endotoxin was filtered through the membrane sample at ambient temperature.

A volume of 160 ml was filtered through a filter holder comprising a membrane sample having a surface area of 0.8 $cm^2$. Flow rate was 2 ml/min, filtration time was 80 min. In total, 96.000 EU (120.000 $EU/cm^2$) of endotoxin were filtered through each membrane sample. Fluid samples were taken from the challenge solution, the filtrate after start of filtration (FS), the filtrate pool (FP), and the filtrate after the end of filtration (FE). LRV was determined as described above.

The results obtained for the uncoated membrane used as starting material in Example 1 (A), the PEI-coated membrane obtained in Example 1 (B), and the composite membrane obtained in Example 1 (C) are shown in Table 1.

Table 1

| Sample | LRV (FS) | LRV(FE) | LRV (FP) |
|--------|----------|---------|----------|
| A | 0 | - | 0 |
| B | 2.0 | 1.1 | 1.5 |
| C | 4.5 | 2.6 | 3.3 |

**Claims**

1. A composite membrane comprising

   i) a porous polymeric support structure,
   ii) a polyethylene imine (PEI) layer coated onto the support structure i), and
   iii) poly(hexamethylene biguanide) (PHMB) grafted to the coating layer ii) of the support structure.

2. The composite membrane of claim 1, wherein the porous polymeric support structure i) is a flat sheet membrane.

3. The composite membrane of claim 1, wherein the porous polymeric support structure i) is a hollow fiber membrane.

4. The composite membrane of any one of claims 1 to 3, wherein the porous polymeric support structure i) comprises at least one synthetic polymer selected from polysulfones (PSU), polyethersulfones (PES), polyacrylonitriles (PAN), and copolymers and blends of the individual polymers.

5. The composite membrane of any one of claims 1 to 4, wherein the polyethylene imine (PEI) layer ii) has been cross-linked by reaction with a bifunctional cross-linker featuring terminal epoxy groups.

6. The composite membrane of any one of claims 1 to 5, wherein the weight of the polyethylene imine (PEI) layer ii) is in the range of from 3 wt% to 7 wt% of the total weight of the composite membrane.

7. The composite membrane of any one of claims 1 to 6, wherein the weight of PHMB grafted onto the coating layer ii) is from 8 to 15 wt% of the total weight of the composite membrane.

8. The composite membrane of any one of claims 1 to 7, wherein PHMB moieties are covalently bound to the PEI layer ii) via diglycidyl ethers.

9. A method for preparing the composite membrane according to any one of claims 1 to 8, the method comprising

a) providing a porous polymeric support structure,

b) reacting the porous polymeric support structure with an aqueous coating solution comprising PEI and, optionally, a bifunctional cross-linker with terminal epoxy groups, to obtain a porous polymeric support structure coated with PEI,

c) reacting the porous polymeric support structure coated with PEI obtained in step b) with an aqueous solution comprising PHMB and a bifunctional cross-linker with terminal epoxy groups, to obtain the composite membrane.

10. The method of claim 9, wherein the aqueous coating solution used in step b) comprises from 0.5 to 4.0 wt% PEI, relative to the total weight of the aqueous coating solution.

11. The method of claim 9 or 10, wherein the aqueous coating solution used in step b) comprises from 0.05 to 2.0 wt% of the bifunctional cross-linker with terminal epoxy groups, relative to the total weight of the aqueous coating solution.

12. The method of any one of claims 9 to 11, wherein the aqueous solution comprising PHMB and a bifunctional cross-linker with terminal epoxy groups used in step c) contains from 1 to 10 wt% of PHMB, relative to the total weight of the aqueous solution.

13. The method of any one of claims 9 to 12, wherein the aqueous solution comprising PHMB and a bifunctional cross-linker with terminal epoxy groups used in step c) contains from 1 to 10 wt% of the bifunctional cross-linker with terminal epoxy groups, relative to the total weight of the aqueous solution.

14. A filtration and/or diffusion device comprising the composite membrane according to any one of claims 1 to 8.

15. The filtration and/or diffusion device of claim 14, wherein the composite membrane takes the form of a planar sheet or a stack of planar sheets.

**EUROPEAN SEARCH REPORT**

Application Number

EP 23 21 4973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/174749 A1 (YEUNG KING LUN [CN] ET AL) 13 June 2019 (2019-06-13)<br>* claims 4,20; figures 9,10,11,13; examples 7-12,23-27,34 * | 1-15 | INV.<br>B01D67/00<br>B01D69/12<br>B01D71/60 |
| Y | EP 0 735 852 B1 (BIOPOLYMERIX INC [US]; SURFACINE DEV COMPANY LLC [US]) 22 September 1999 (1999-09-22)<br>* paragraphs [0009], [0040], [0107]; claims 9,12,14 * | 1-15 | |
| Y | US 2010/075131 A1 (ETZEL MARK R [US] ET AL) 25 March 2010 (2010-03-25)<br>* paragraphs [0030], [0039], [0059], [0097], [0111], [0112], [0120] * | 1-15 | |
| Y | ZHOU CHAO ET AL: "Robust anti-infective multilayer coatings with rapid self-healing property",<br>MATERIALS SCIENCE AND ENGINEERING C, ELSEVIER SCIENCE S.A, CH,<br>vol. 121, 2 January 2021 (2021-01-02), XP086496063,<br>ISSN: 0928-4931, DOI: 10.1016/J.MSEC.2020.111828<br>[retrieved on 2021-01-02]<br>* abstract; figure 1 * | 1-4,6,7 | |

TECHNICAL FIELDS SEARCHED (IPC)

B01D

The present search report has been drawn up for all claims

| Place of search | Date of completion of the search | Examiner |
|---|---|---|
| Munich | 22 March 2024 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4973

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | Publication date | Patent family member(s) | | Publication date |
|---|---|---|---|---|---|
| US 2019174749 | A1 | 13-06-2019 | CN | 109414016 A | 01-03-2019 |
| | | | EP | 3478064 A1 | 08-05-2019 |
| | | | JP | 2019528245 A | 10-10-2019 |
| | | | JP | 2021169494 A | 28-10-2021 |
| | | | JP | 2023153927 A | 18-10-2023 |
| | | | KR | 20190017024 A | 19-02-2019 |
| | | | US | 2019174749 A1 | 13-06-2019 |
| | | | WO | 2018001359 A1 | 04-01-2018 |
| EP 0735852 | B1 | 22-09-1999 | AT | E184780 T1 | 15-10-1999 |
| | | | AU | 692220 B2 | 04-06-1998 |
| | | | DE | 69420862 T2 | 18-05-2000 |
| | | | EP | 0735852 A1 | 09-10-1996 |
| | | | EP | 0891712 A1 | 20-01-1999 |
| | | | JP | 3860207 B2 | 20-12-2006 |
| | | | JP | H09510629 A | 28-10-1997 |
| | | | US | 5869073 A | 09-02-1999 |
| | | | US | 6030632 A | 29-02-2000 |
| | | | WO | 9517152 A1 | 29-06-1995 |
| US 2010075131 | A1 | 25-03-2010 | BR | PI0913707 A2 | 13-10-2015 |
| | | | BR | PI0913710 A2 | 13-10-2015 |
| | | | CN | 102186908 A | 14-09-2011 |
| | | | CN | 102203173 A | 28-09-2011 |
| | | | EP | 2342269 A1 | 13-07-2011 |
| | | | EP | 2342270 A1 | 13-07-2011 |
| | | | EP | 3255085 A1 | 13-12-2017 |
| | | | JP | 5711127 B2 | 30-04-2015 |
| | | | JP | 5744737 B2 | 08-07-2015 |
| | | | JP | 2012503085 A | 02-02-2012 |
| | | | JP | 2012503087 A | 02-02-2012 |
| | | | US | 2010075131 A1 | 25-03-2010 |
| | | | US | 2010075560 A1 | 25-03-2010 |
| | | | US | 2014004595 A1 | 02-01-2014 |
| | | | WO | 2010033794 A1 | 25-03-2010 |
| | | | WO | 2010033807 A1 | 25-03-2010 |

EPO FORM P0459

For more details about this annex : see Official Journal of the European Patent Office, No. 12/82

# EP 4 566 699 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 28757-47-3
- *CHEMICAL ABSTRACTS*, 32289-58-0